# EUROPEAN PATENT SPECIFICATION

(11) **EP 3 914 983 B1**
(45) Date of publication and mention of the grant of the patent: **01.05.2024**
(21) Application number: 19808688.6
(22) Date of filing: 18.11.2019
(51) Int. Cl.: G05D 1/02, B63H 25/00

(54) **DYNAMIC POSITIONING CONTROL**
DYNAMISCHE POSITIONSREGELUNG
COMMANDE DE POSITIONNEMENT DYNAMIQUE

(30) Priority: 16.11.2018 DK PA201800871
(43) Date of publication of application: 01.12.2021
(73) Proprietor: Noble Drilling A/S, 2800 Kgs. Lyngby (DK)
(72) Inventor: RØN PEDERSEN, John, 3600 Frederikssund (DK)
(74) Representative: Marks & Clerk LLP
(86) International application number: PCT/DK2019/050354
(87) International publication number: WO 2020/098898

(56) References cited:
- WO-A1-2012/080241
- WO-A1-2017/123827
- WO-A1-2019/048013
- KR-A- 20140 056 887
- US-A1- 2015 142 227
- US-A1- 2016 009 352

## Description

### FIELD

The present disclosure relates to a vessel comprising a drive-off prevention controller, a dynamic positioning system, and a propulsion system and methods of dynamic positioning.

### BACKGROUND

Dynamic positioning is used in the offshore oil and gas industry for the station-keeping of vessels, such as drill ships, semi-submersibles, FPSOs and the like. Such vessels may perform operations (e.g., drilling) which require infrastructure, such as risers, to extend from the vessel to a fixed subsea location, such as a wellhead location. Any undesired deviation of the vessel, which may be caused by wave, wind and current interactions, may cause undesirable stresses and strains to develop in the infrastructure extending from the vessel, presenting personnel and environmental safety issues.

Dynamic positioning involves computer based control of a vessel's position and typically includes a controller which determines the position of the vessel relative to a target position and then operates a vessel propulsion system, usually including multiple thrusters, as required, to maintain the vessel in the target position. The position of the vessel can be determined using any of a range of position determination sensors.

However, even though modern position determination sensors can be reliable and accurate, any errors in the position determination sensors may result in unwanted operation of the vessel's propulsion system. This could result in a "drive off" situation where the propulsion system moves the vessel away from the target position under power, rather than maintaining the target position.

US2015142227 A1 discloses a dynamic positioning system for controlling thrusters of a vessel. The dynamic positioning system includes a controller configured to predict position and heading of the vessel and efficiently control the thrusters based on the predicted position and heading. Dynamic positioning systems are energy intensive because fuel is used to run thrusters to counteract environmental forces that can move the vessel out of position. By selecting of a small range for each of the working angle range and the operating angle range, the thruster wear and tear has been reduced, heading oscillations has largely been removed and fuel savings has been obtained, emissions reduced, and thruster activity reduced.

US2016009352 A1 discloses a floating LNG vessel including a hull and a deck, a topsides hydrocarbon processing facility installed at or above the deck of the hull. The floating LNG vessel has a dynamic positioning control system operatively associated with a system of thrusters where the dynamic positioning control system maintains the FLNG vessel at a desired heading around a station keeping point during LNG production operations.

WO2012080241 A1 discloses a computer-implemented method for generating thruster settings for an over-actuated thrust allocation system. The thruster settings are configured to control thrusters of a craft to keep it on a desired position or track. The method includes minimizing a cost function associated with the thrusters on the basis of said total desired thrust and one or more non-linear thruster constraints associated with the physical or operational limits of the thrusters.

KR20140056887 A discloses a dynamic positioning system for maintaining dynamic positioning performance through automatic adoption to the environment of a dynamic positioning system by recognizing draft variation of a ship. The dynamic positioning system maintains the position of a ship so that the current position of the ship cannot pass a fixed range from a target point.

### SUMMARY

According to a first aspect there is provided a vessel comprising a drive-off prevention controller, a dynamic positioning system, and a propulsion system according to claim 1.

At least one of the indicative conditions may comprise weather or environmental data received by the drive-off prevention controller indicating that there has been no change in weather or environmental conditions. At least one of the indicative conditions may comprise the demand, or rate of increase in demand, of the propulsion system being greater than a first conditional threshold whilst weather or environmental data received by the drive-off prevention controller indicates that there has been no change in weather or environmental conditions.

Many conventional dynamic positioning adjustments may be due to weather or environmental conditions. If a sudden increase in power demand is determined without a corresponding change in weather or environmental conditions, then this may be indicative that the determined control of the propulsion unit based on the determined position of the vessel is incorrect.

The weather or environmental conditions and/or data may comprise one or more of: wave conditions, wind conditions and/or current at the vessel. The weather or environmental conditions and/or data may comprise one or more of: wave height, instantaneous wave speed, average wave speed, wave force, wind strength, wind direction, wind force, sea current strength, current speed, force due to currents, current direction, amount of rainfall, temperature, humidity, air pressure, and/or the like, at, around and/or below the vessel. The weather or environmental conditions and/or data may comprise horizontal wave drift force on the vessel. The horizontal wave drift force may be determined, e.g. by the drive-off prevention controller or by another processing device, using 3-D radiation-diffraction theory, under potential theory, empirically using wave drift force coefficients and/or the like. The weather or environmental conditions or data may comprise the speed, direction and/or strength of surface currents, e.g. currents at a depth of less than a depth threshold. The weather or environmental conditions or data may comprise the speed, direction and/or strength of currents under the water, e.g. below, lower than, or directly underneath the vessel and/or on or proximate the sea bed, e.g. currents at a depth of greater than a depth threshold. The weather or environmental conditions may comprise a viscous effect or properties derived therefrom. The weather or environmental data may comprise a vessel current that is a function or combination (e.g. a vector combination) of a plurality of weather or environmental conditions that affect the vessel, e.g. one or more of the above. The weather or environmental data may comprise at least one metric of a loop or recirculating current under the vessel.

The drive-off prevention controller may comprise or be configured to receive or derive at least part of the weather or environmental data from at least one sensor for monitoring environmental, sea or weather conditions at or around the vessel. The at least one sensor may comprise a water speed sensor, a tide direction sensor, a tide strength sensor, a current sensor such as a surface current sensor, a wave height sensor and/or the like. The drive-off prevention controller may comprise or be configured to receive or derive at least part of the weather or environmental data from data storage and/or from one or more weather or environmental data servers, which may be communicated from a remote data source or server.

The drive-off prevention controller may be configured to determine the change of the weather conditions, e.g. from the data received from at least one of: the at least one sensor, the data storage and/or the one or more data servers.

The drive-off prevention controller may be configured to determine that there has been no corresponding change in weather or environmental conditions if one or more or all of the weather conditions change by less than a threshold amount, e.g. in a determined or predetermined or set timeframe. The drive-off prevention controller may be configured to determine if there has been a corresponding change in weather or environmental conditions based on a determined or predetermined algorithm, set of conditions or parameters. The algorithm, set of conditions or parameters may be determined based on historical data, experimental data, modelling data, use of scale models, calibration data, theoretical modelling and/or the like. The drive-off prevention controller may be configured to determine if there has been a corresponding change in weather or environmental conditions using a machine learning algorithm, such as a neural network (e.g. a deep neural network). The machine learning algorithm may receive at least the weather condition data and/or the demand, or rate of increase in demand, of the propulsion system as inputs, and may provide the determination if there has been a corresponding change in weather or environmental conditions as an output. The machine learning algorithm may map possible values of the inputs to the possible values of the outputs. The machine learning algorithm may be trained and/or trainable using training data, which may comprise or be derived from historical data, experimental data, modelling data, use of scale models, calibration data, theoretical modelling and/or the like.

The drive-off prevention controller may be configured to access vessel information data, such as vessel geometry and vessel behavioural properties. The drive-off prevention controller may be configured to take into account the vessel information data when determining if there has been a corresponding change in weather or environmental conditions, e.g. by adjusting the threshold amount or by providing the vessel information as an input to the algorithm or machine learning algorithm. Some vessels may be more or less susceptible to weather or environmental conditions and the above features may allow for this to be accounted for by the drive-off prevention controller.

The drive-off prevention controller may be configured to default to apply the adjustment to the control of the propulsion system determined by the dynamic positioning system and to selectively stop applying or cancel the adjustment to the control of the propulsion system responsive to the one or more indicative conditions. Alternatively, the drive-off prevention controller may be configured to default to not applying the adjustment to the control of the propulsion system determined by the dynamic positioning system and to selectively apply the adjustment to the control of the propulsion system responsive to the one or more indicative conditions.

At least one or each of the indicative conditions may be indicative of the vessel being at or away from a position of the vessel determined by a position determining system used to determine the location of the vessel and/or at or away from the target position.

One of the indicative conditions may be based on one or more properties of a riser extending from the vessel, e.g. stress, a bend, flex or inclination of at least part or all of the riser (e.g. in one or more of an upper part of the riser, a mid-part of the riser, a lower part of the riser, an upper flex joint of the riser, and/or a lower flex joint of the riser) being less than a threshold amount. The controller may be configured to apply the adjustment when the one or more properties of the riser are within the threshold amount and/or may be configured to not apply or remove the adjustment when the one or more properties of the riser are out with or above the threshold amount.

At least one of the indicative conditions may comprise an amount of power demanded or consumed by the propulsion system being above a power threshold.

At least one of the indicative conditions may comprise a position of the vessel determined using a location determination system (e.g. a satellite positioning system) differs from a position of the vessel determined by the dynamic positioning system or by an alternative type of location determination system by more than a threshold amount. The controller may be configured to apply the adjustment when the position of the vessel determined using the location determination system (e.g. a satellite positioning system) differs from the position of the vessel determined by the dynamic positioning system or by an alternative type of location determination system by the same or less than a threshold amount and/or may be configured to not apply or remove the adjustment when the position of the vessel determined using the location determination system (e.g. a satellite positioning system) differs from the position of the vessel determined by the dynamic positioning system or by an alternative type of location determination system by more than the threshold amount.

At least one of the indicative conditions may comprise a condition based on vessel current. A "rogue thruster may be registered by the system as an issue with "vessel current" and an error leading to a drive off may be a miscalculation of the vessel current leading the system to believe that it needs to counter forces that are not there. At least one of the conditions may comprise the demand, or rate of increase in demand, of the propulsion system being greater than a threshold whilst a vessel current is more and/or less than an associated threshold. The vessel current may have been less than the threshold for a determined or predetermined period of time. The vessel current may be a sum of the forces on the vessel minus any wind forces. The controller may be configured to apply the adjustment when the demand, or rate of increase in demand, of the propulsion system is greater than a threshold whilst a vessel current is less that a threshold and/or may be configured to not apply or remove the adjustment when the demand, or rate of increase in demand, of the propulsion system and the vessel current are both above or both below their respective thresholds.

At least one of the indicative conditions may comprise a fault condition being detected, for example in at least one of the thrusters, or in a sensor, or a motor, or an engine, e.g. the controller may be configured to apply the adjustment when the fault condition is detected and/or may be configured to not apply or remove the adjustment when the fault condition is not detected.

At least one of the indicative conditions may comprise a condition detected by a wellhead monitor, e.g. the condition detected by the wellhead monitor indicating a normal or expected status, for example whilst the demand, or rate of increase in demand, of the propulsion system is greater than a first conditional threshold.

At least one of the indicative conditions may comprise a location of the vessel determined from at least one type of position determining system being different to the location of the vessel determined from at least one different type of position determining system. At least one of the indicative conditions may comprise a collision or imminent collision being detected or predicted; and/or an operation on, or force being applied to, the vessel by another vessel such as a supply boat or tug.

The ability to adjust the standard control of the propulsion system during dynamic positioning in accordance with the at least one indicative condition may facilitate improvements in addressing unrequired vessel movements (e.g. drive-off) based on false or inaccurate vessel position data. For example, the controller monitors the at least one indicative condition and this may contradict a determined position of the vessel. If so, then the system may be configured to adjust the control of the propulsion system in accordance with the at least one indicative condition. As such, the at least one indicative condition is not used as a position determination per se, but a check to ensure that the control of the propulsion system based on the determined position is correct.

The propulsion system may comprise one or more thrusters of the vessel. The propulsion system may comprise a system specifically for repositioning the vessel. The propulsion system may be separate from a primary drive system of the vessel.

The controller may be configured to adjust the control of the propulsion system according to the at least one indicative condition in a way that results in a time delay to fully implement any change in operation of the propulsion system which would seek to alter the position of the vessel. Such a time delay may provide an operator with a sufficient time or opportunity to react or intervene if required.

The adjustment applied to the control of the propulsion system may comprise restricting an operation of the propulsion system according to the at least one indicative condition. The controller may be configured to adjust control of the propulsion system by limiting a power characteristic of the propulsion system, e.g. to below a limit. The controller may be configured to adjust control of the propulsion system by applying a reduction factor, e.g. a dynamically applied and/or recalculated reduction factor, e.g. of 90%, 80%, 70%, 60% or below, to the maximum power of the propulsion system or to the power for the propulsion system determined by the dynamic positioning system (e.g. by the dynamic positioning system controller). The power characteristic may comprise at least one of: a power demand, a rate of increase in power demand, power consumption, a rate of increase in power consumption, a power output, and/or a rate of increase in power output, of the propulsion system. The limitation of the power characteristic may comprise a hard limitation (e.g. if the power characteristic is the power demand, consumption or output of the propulsion system). The limitation of the power characteristic may comprise a soft limitation (e.g. if the power characteristic is the rate of increase in power demand, consumption or output of the propulsion system). The limiting of the power characteristic of the propulsion system may comprise a limitation of the characteristic of the propulsion system determined based on the position of the vessel relative to the target position. The adjustment applied to the control of the propulsion system may comprise reducing a set point for the propulsion system determined by the dynamic positioning system, e.g. by the dynamic positioning system controller. The set point may optionally comprise one or more of a power set point, a torque set point, or a revolution rate (e.g. RPM) set point.

The adjustment applied to the control of the propulsion system may comprise an adjustment being applied via a thruster control system, a thruster motor controller, a vessel thruster control system and/or the like. It will be appreciated that a command for applying or not applying the adjustment to the control of the propulsion system (e.g. the thrusters) may be generated by a physical or virtual controller (e.g. the drive-off prevention controller) and there may be one or more other physical or virtual controllers (e.g. a dynamic positioning system controller, a vessel thruster controller, a thruster controller, a thruster motor controller, and/or the like) between the controller that originated the command and the propulsion system itself. For example, a thruster controller may communicate with VFD's controlling the revolution of the thrusters and a vendor's thruster control which controls the angle of the thruster. The drive-off prevention controller may be a physically, functionally or logically distinct system to any of the above controllers or may be integrated into or provided as a function of any of the above controllers. Furthermore, the drive-off prevention controller and/or the application of the adjustment to the control of the propulsion system may be effected by any or all of the above identified controllers. That is, the functionality or part of the functionality (such as the realisation of the adjustment to the control of the propulsion system) of the drive-off prevention controller described herein may be provided as a separate standalone system that communicates with one or more existing controllers (e.g. as a retro-fit) or integrated physically, virtually and/or functionally into, or distributed over, one or more of the above existing controllers (e.g. the dynamic positioning system controller, a vessel thruster controller, a thruster controller, a thruster motor controller, and/or the like).

The controller may be configured to set and/or dynamically adjust the limit. The controller may be configured to set and/or dynamically adjust the limit based on power consumption or output of the propulsion system. The controller may be configured to set and/or dynamically adjust the limit based on average power consumption or output of the propulsion system or a range of variation in power consumption or output during normal operation of the dynamic positioning system. For example, the controller may be configured to set and/or dynamically adjust the limit to be greater than the average power consumption or output of the propulsion system or greater than a majority or all of a range of variation in power consumption or output during normal operation of the dynamic positioning system.

By limiting a rate of increase of the power consumption of the propulsion system, any operation of the propulsion system determined by the system based on the comparison of the determined position of the vessel with the target position may still occur, it is just that the full implementation of the operation may be delayed or slowed down, thereby allowing an operator more time to make a manual intervention in the case of an incorrect operation but without preventing any necessary operations from occurring.

The controller may be configured to adjust the control of the propulsion system when the at least one indicative condition is met. The at least one indicative condition may comprise a property of the riser being below an associated threshold or within an operational range. The at least one indicative condition may comprise the property of the riser being below an associated threshold or within an operational range for a period of time. The period of time may be predetermined or determined, e.g. based on pervious "normal" operation of the vessel. The controller may be configured to control the propulsion system of the vessel based on the determined position of the vessel relative to the target position without further limiting or adjustment of the power characteristic if the property of the riser is below the associated threshold or within the operational range.

In this way, the controller may be configured to potentially limit the power characteristic if the at least one indicative condition is met (i.e. the indicative condition is indicative of the vessel being in the target position) but to revert to standard control based on determined position without the possibility of additional limitation if the at least one indicative condition is not met (i.e. the riser is in a condition associated with the vessel being away from the target position). This may reduce the likelihood of the controller preventing a justified operation to return the vessel to the target position. The controller may adjust the control of the propulsion system based on at least the at least one indicative condition as a default and may revert to standard control when the at least one indicative condition is not met (i.e. default on). Alternatively, the controller may perform standard control when the condition is not met as a default and adjust the control of the propulsion system based on at least the at least one indicative condition when the condition is met (i.e. default off). The controller may be configured to set or vary one or more of the thresholds used to determine whether the at least one indicative condition has been met in use, e.g. according to a vessel current. The controller may be configured to increase the threshold when the vessel current increases or is above a current threshold.

The controller may be configured to adjust control of the propulsion system by limiting the power characteristic of the propulsion system if a power criterion of the propulsion system is above a power threshold. The power criterion may comprise at least one of: the power demand or a rate of increase in power demand of the propulsion system, power consumed by the propulsion system, a rate of increase in the power consumed by the system, the power output by the propulsion system, the rate of increase in power output by the propulsion system and/or the like. The power threshold may be a hard threshold (e.g. when the criterion is the power demanded, consumed or output by the system). The power threshold may be a soft threshold (e.g. when the criterion is a rate of increase in the power demanded, consumed or output by the system). The controller may be configured to control the propulsion system of the vessel based on the determined position of the vessel relative to the target position without further limiting the power characteristic if the power demanded or consumed by the propulsion system is below the power threshold. The power threshold may be dynamically adjustable by the controller. The controller may be configured to adjust the power threshold depending on the power demand or consumption or output of the propulsion system. The controller may be configured to adjust the power threshold depending on the vessel current. The vessel current may comprise a sum of forces experienced by the vessel mins any wind forces. The controller may be configured to increase the power threshold when the vessel current increases or is above a current threshold. The controller may be configured to set the power threshold to be a function of the average power demanded, consumed or output by the propulsion system. The controller may be configured to set the power threshold to be greater than the average power demanded, consumed or output by the propulsion system.

In this way, the controller may allow normal low power operations that would be routinely expected in order to maintain the vessel position, e.g. to counteract currents, wind and the like, without the limitation of the power characteristic being applied and may only apply the limitation to higher power operation of the propulsion system, as typically occurs when dynamic position is based on erroneous position sensor data.

When at least one of the indicative conditions is based on one or more properties of the riser extending from the vessel, the property of the riser may be determined or monitored by a riser management system, which may communicate the value of the property of the riser to the controller.

The monitored property of the riser may be or comprise the inclination of at least part of the riser. The inclination of the riser may be measured by at least one tilt sensor provided on the riser. The tilt sensor may comprise an accelerometer, a gyroscopic sensor, a force balance sensor, a piezo stack sensor, a MEMS tilt sensor, an electrolytic tilt sensor, a capacitive tilt sensor, and/or the like. The at least part of the riser may be or comprise a flex joint. The inclination may be an inclination of the flex joint.

The one or more properties of the riser supported by the vessel may be or comprise an angle, orientation, bending, flex, stress or strain of at least part or all of the riser.

The controller may be configured to determine if the monitored property of the riser (e.g. inclination) is above a disconnection threshold. The controller may be configured to automatically disconnect the riser, and/or provide an alert to an operator to disconnect the riser, if the monitored property of the riser exceeds the disconnection threshold. The disconnection of the riser may be an emergency disconnect of the riser (EDS).

The disconnection threshold may be higher than the threshold and/or out with the operational range, but optionally need not be. This may allow the problem to be solved by adjusting control of the propulsion system in the first instance before the riser is disconnected.

The disconnection threshold may be below a maximum value of the monitored property at which disconnection of the riser can occur. For example, the disconnection threshold may be at least 1° but less than 6° inclination of the riser. The disconnection threshold may be less than the maximum value of the monitored property at which disconnection of the riser can occur by at least an operational margin, e.g. by at least 3°, 4° or 5°. The operational margin may allow time for the riser to be disconnected before the maximum value of the monitored property at which disconnection of the riser can occur is reached.

The riser may be a drilling riser, production riser, and/or the like. The riser may extend from the vessel into the sea to a fixed location, such as a wellhead location, BOP, manifold, Xmas tree, and/or the like. The riser may be a riser being handled, moved, supported, and/or attached to the vessel.

The controller may be configured to determine and/or receive one or more signals representative of the property of the riser. The one or more signals may comprise signals from one or more control sensors, which may be configured to monitor, measure or determine the property of the riser. The one or more control sensors may be provided on the riser. The one or more control sensors may comprise one or more inclinometers, accelerometers, stress gauges, strain gauges, tilt sensor, and/or the like.

The control sensors may comprise at least two duplicate sensors, which may be control sensors of the same type and/or which may monitor the same property of the same part of the riser. The controller may be configured to adjust the control of the propulsion system on the basis of signals from at least two or at least three control sensors (which may by duplicates of each other), e.g. based on a majority decision, an average or other predefined relationship between the outputs of the duplicate sensors. The controller may be configured to adjust the control of the propulsion system on the basis of signals from an odd number of control sensors, which may include at least three control sensors that are duplicates of each other.

The property of the riser may be or comprise one or more properties of part of the riser, e.g. the flex joint. The riser may comprise or be provided with at least two flex joints. A respective flex joint may be provided at opposing ends of the riser. At least one of the flex joints may be configured to be located underwater. At least one of the flex joints may be configured to be located at or near the sea bed, e.g. proximate or connected to the wellhead, Xmas tree, manifold, or blow out preventer (BOP). At least one of the control sensors may be configured to monitor the property of the flex joints, e.g. to monitor the angle, inclination, bending, flex, stress or strain of the flex joint. At least one of the control sensors may be provided on or coupled to at least one or each of the flex joints.

One or more of the control sensors may be provided at one or both ends of the riser, at a mid-point of the riser and/or distributed along the riser.

The controller may be configured to set or dynamically adjust at least one of: the power threshold, the disconnection threshold and/or the limit on the power characteristic at least partially based on a model of the vessel's response to power. The model may translate between movement of the vessel and power demand or consumption of the propulsion system.

The controller may be configured to set or dynamically adjust at least one of: the power threshold, the disconnection threshold and/or the limit on the power characteristic at least partially based on a drift off calculation (e.g. a time to reach a maximum value of the monitored property in the event of a complete black out or failure of the dynamic positioning system). The drift off calculation may be determined by the controller or determined by the dynamic positioning system of the vessel and communicated to the controller. The drift off calculation may be calculated continuously or at regular intervals.

The controller may be configured to set or dynamically adjust at least one of: the power threshold, the disconnection threshold and/or the limit on the power characteristic at least partially based on direction of the thrusters and/or the weather or environmental conditions.

The controller may be configured to adjust the control of the propulsion system depending on the power demanded or consumed by the propulsion system, e.g. depending on an amount of power demanded or consumed or a rate of change in the power demanded or consumed.

The adjustment of the control of the propulsion system may comprise limiting, reducing or otherwise modifying the power characteristic of the propulsion system, for example when the at least one indicative condition is met and optionally also when the amount of power demanded or consumed by the propulsion system is above the power threshold.

The adjustment of the control of the propulsion system may protect against drive-off of the vessel. At least one of the at least one indicative conditions may comprise the property of the riser determined by the controller being below the associated threshold or within the operational range. At least one of the at least one indicative conditions may comprise the amount of power demanded or consumed by the propulsion system being above the power threshold. In other words, if the at least one indicative condition is met, then the controller is configured to selectively apply the adjustment of the control of the propulsion system, e.g. by limiting the power characteristic of the propulsion system, otherwise the system simply controls the propulsion system based on the determined position of the vessel relative to the target position without the adjustment of the control of the propulsion system.

At least one of the at least one indicative conditions may comprise the demand, or rate of increase in demand, of the propulsion system being greater than a second conditional threshold resulting from a change in position that is greater than a distance threshold, e.g. greater than 5m or 10m, which may be over a predetermined or determined period of time. If the system determines that the vessel has made a very quick or instantaneous movement beyond the distance threshold, then this may be indicative that there is an error in the position determination made by the controller, as such as movement of a vessel may be unlikely.

In another example, at least one of the at least one indicative conditions may comprise a condition based on vessel current. At least one of the conditions may comprise the demand, or rate of increase in demand, of the propulsion system being greater than a threshold whilst a vessel current is less that a threshold. The vessel current may have been less than the threshold for a determined or predetermined period of time. The vessel current may be a sum of the forces on the vessel minus any wind forces.

The limitation, reduction or modification of the operation of the propulsion system may allow some operation of the propulsion system, but the operation of the propulsion system may be slower, delayed or less than would otherwise be allowed.

The controller may be configured such that, when the at least one indicative condition is not met, then the controller allows the dynamic positioning system to control the propulsion system according to the difference between the determined position of the vessel and the target position, e.g. without additional limitation or other adjustment of the propulsion system beyond what would normally be determined by the dynamic positioning system.

The adjustment to the control of the propulsion system may be time dependant, e.g. time limited. For example, the controller may be configured to limit, reduce or otherwise modify the operation (e.g. the power or rate of increase in power) of the propulsion system for a determined or predetermined period of time.

With prior art dynamic positioning controllers, when a sensor or other means used by the controller to determine the position of the vessel gives an incorrect reading then the prior art controller could potentially incorrectly determine that the vessel is out of position when it is not or is further out of position than it really is and increase operation of the propulsion system (e.g. thrusters) of the vessel in order to remedy this incorrectly determined situation. This may undesirably result in the vessel driving off or away from the target position rather than maintaining it. When the vessel is handling or otherwise supporting a riser, this could undesirably incline, bend, flex or even damage the riser.

The controller described herein may be in communication with sensors and/or databases for determining weather and environmental conditions at the location of the vessel and optionally other sensors or data sources such as the control sensors or other mechanisms for determining properties of at least part of the riser, such as the angle, orientation, inclination, bending, flex, stress or strain of at least part or all of the riser. The controller may use these to adjust the control of the propulsion system.

If the at least one indicative condition is met (e.g. the power demand rises suddenly when there has been no change in weather or environmental condition, at least above a threshold amount), then it may be indicative that the vessel is still in the target position, such that any sudden requirement determined by the controller to greatly increase power or operation of the propulsion system may be spurious. In this case, the controller may limit the operation (e.g. it may limit the power or a rate of increase in power) of the propulsion system. The controller may limit the operation (e.g. it may limit the power or a rate of increase in power) of the propulsion system only if the power being demanded or consumed by the propulsion system is also above the power threshold.

In this way, when one of the sensors or other means used by the dynamic positioning system to determine the position of the vessel gives an incorrect reading but the indicative condition has been met (i.e. which may be indicative of the vessel being at the target position), then the controller may provide a limit on the power or rate of increase in power of the propulsion system (e.g. thrusters) of the vessel, even though the (incorrectly) determined position of the vessel relative to the target position would otherwise indicate that the power or rate of increase in power of the propulsion system should be beyond the limited amount. This may delay, reduce or limit any drive-off that would otherwise occur due to errors in the position determination. This may provide time for a human operator to identify any potential incorrect drive-off situation that is occurring or likely to occur and have sufficient time to intervene.

By limiting rather than preventing all operation of the propulsion system of the vessel when the controller determines that the at least one indicative condition is met, and optionally also when the power demanded or consumed by the propulsion system is above the power threshold, then low power operations of the propulsion system to make fine adjustments that are unlikely to result from errors in the determined position can still be performed, whilst large ramp ups in operation of the propulsion system are limited.

Furthermore, by limiting only the rate of increase of the power consumed by the propulsion system and/or by making any adjustment (e.g. limiting) of the operation of the propulsion system time dependent, then the determined increase in power may only be slowed or delayed rather than prevented. This may allow an operator to reasonably make a manual intervention but the limitation on the power consumed by the propulsion system may not persist to the extent that it could undesirably prevent a genuine corrective action.

The controller may be configured to receive data indicative of, or usable to determine, a position of the vessel from at least one further sensor. The controller may be configured to determine the position of the vessel using the data received from the at least one further sensor.

The sensors may comprise sensors that are used or usable for determining the position of the vessel and/or for monitoring environmental, sea or weather conditions at or around the vessel. At least one or each of the sensors may be provided on the vessel. The sensors may comprise more than one different type of sensor.

At least one of the sensors may comprise at least one satellite positioning system sensor, e.g. at least one GPS, GLONASS or Galileo sensor, configured to determine the position of the vessel using satellite positioning. The sensors may comprise at least two different types of satellite positioning sensor. In one example, at least one of the further sensors comprises a DGPS 700 and at least one of the further sensors comprises a DGPS 5D sensor.

At least one of the sensors may comprise at least one weather sensor, such as a wind sensor for monitoring the speed, strength and/or direction of the wind at or around the vessel.

At least one of the sensors may comprise at least one motion sensor such as a gyroscope or accelerometer for monitoring motions, e.g. movement, translation or reorientation, of the vessel. In one example, the sensors may comprise at least four gyros for monitoring motion of the vessel.

At least one of the sensors may comprise a sea sensor configured to determine water speed, tide direction and/or strength, wave height and/or the like.

The target position may be a pre-set position or a manually set position and may be stored in a memory of the controller.

The controller may comprise at least one processor. The controller may comprise and/or be configured to access at least one data store or memory. The controller may comprise a communications system, such as a wired and/or wireless communications system. The controller may be configured to communicate with a control system of the vessel, the propulsion system of the vessel, that at least one control sensor and/or the at least one further sensor, e.g. via wired and/or wireless communication. The features above and below may be implemented using the at least one processor.

The controller may be configured to communicate control actions to the dynamic positioning system, vessel controller or to the propulsion system using the communications system.

The controller may be separate to, remote and/or distinct from a dynamic positioning system of a vessel. The controller may be configured to communicate with an existing dynamic positioning system of a vessel. The controller may be configured to control or intervene in the control of the dynamic positioning system. The controller may be configured to be retro-fitted to an existing dynamic positioning control system.

The controller may be integrated with a dynamic positioning system of a vessel. The controller may be a module of the dynamic positioning system of the vessel. The controller may be a software or hardware module of the dynamic positioning system. The controller may be implemented as part of a control system of the dynamic positioning system.

The controller may comprise or be comprised in a dynamic position system controller. The controller may comprise a drive-off prevention controller that is configured to override or modify the control of the dynamic positioning system by the dynamic positioning system controller. The controller may comprise both the dynamic position system controller and the drive-off prevention controller. The drive off prevention controller may be configured to monitor the property of at least the part of the riser; and adjust the control of the propulsion system accordingly. The dynamic positioning system controller may be configured to determine the position of the vessel relative to the target position and to control the propulsion system of the vessel based on the determined position of the vessel relative to the target position. The controller may be configured to communicate with the dynamic position controller, e.g. to override or adjust control commands issued by the dynamic position controller based on the monitored property of at least the part of the riser. The control command may be a command for controlling the propulsion system.

The drive-off prevention controller may not directly control the propulsion system of the vessel. The dynamic positioning system controller may control the propulsion system, e.g. via the control commands. The drive-off prevention controller may be operable to communicate with the dynamic positioning system controller so that the control commands issued by the dynamic positioning system controller are adjusted responsive the communication from the drive-off prevention controller in order to implement the adjustment of the control of the propulsion system.

The controller may be selectively switchable between a conventional operation mode and an intervention enabled mode. The conventional operation mode may be a mode in which the controller controls the propulsion system of the vessel based on the determined position of the vessel relative to the target position without a possibility of further limiting or adjustment of the power characteristic. The conventional operation mode may be a mode in which the drive-off prevention controller is prevented from adjusting the control of the propulsion system, regardless of whether the at least one indicative condition is met. The intervention enabled mode may be a mode in which the controller is configured to determine whether the at least one indicative condition is met and to adjust the control of the propulsion system accordingly. The controller of the present invention may be usable in the intervention enabled mode in shallow water. Shallow water may be water having a depth of 300m or less, e.g. 100m or less. The conventional mode may be preferable during deep water operations where less bending or tilting of the riser occurs, whereas the intervention mode may be preferable in shallow water operations in which the riser may be more susceptible to damage due to bending and the general operational range of the riser corresponds more closely to a straight riser.

The controller may be configured to provide an alarm, alert or other indicator hen the controller applies the adjustment to the control of the propulsion system. The controller may be configured so that the intervention enabled mode or the adjustment of the control of the propulsion system can be overridden, switched off or cancelled, which may be done manually, e.g. by an operator. In this way, if the operator identifies that the controller is adjusting the control of the propulsion system or has identified that an adjustment of the control of the propulsion system is required, but that the operator determines that the dynamic positioning operation is justified, then the operator can over-ride or cancel the adjustment of the propulsion system.

The dynamic positioning system of the vessel may be configured to run in a mode other than a bias mode. The bias mode may be a mode in which pairs of thrusters oriented in opposite directions are run simultaneously to use excess energy generated. The dynamic positioning system may be configured to selectively switch out of bias mode. The dynamic positioning system or vessel may comprise energy storage. The energy storage may be configured to receive excess power from generators. The energy storage may be configured to selectively supply power to the propulsion system. The energy storage may comprise a battery, flywheel, capacitor, and/or the like. Running in a bias mode may give a misleading view of the energy consumption of the propulsion system, which may impact the accuracy of the controller in detecting drive-off conditions. Use of the energy storage to accommodate excess power generated and/or the ability to run in a mode other than a bias mode may remedy this.

An example embodiment of the present disclosure relates to a dynamic positioning system comprising the controller of the first aspect. The dynamic positioning system may comprise a propulsion system or the controller of the dynamic positioning system may be configured to communicate with a control system of the vessel and/or directly with the propulsion system of the vessel, in order to control the propulsion system of the vessel during dynamic positioning of the vessel. The dynamic positioning system may comprise or be configured to communicate with the at least one sensor, database or server, e.g. for determining the weather or environmental conditions. The dynamic positioning system may comprise or be configured to communicate with the at least one further sensor to determine the position of the vessel.

According to a second aspect there is provided a method for dynamically positioning a vessel according to claim 15.

At least one of the indicative conditions may comprise the demand, or rate of increase in demand, of the propulsion system being greater than a first conditional threshold whilst weather or environmental data received by the drive-off prevention controller indicates that there has been no change in weather or environmental conditions.

Adjusting control of the propulsion system may comprise limiting a power characteristic of the propulsion system when the one or more indicative conditions are met. The power characteristic may comprise power demanded or supplied, or a rate of increase in power demanded, consumed or produced by the propulsion system. Adjusting control of the propulsion system may further comprise limiting the power characteristic of propulsion system if the power demanded, consumed by the propulsion system is above a power threshold.

The adjustment to the control of the propulsion system may be time dependant, e.g. 20time limited. For example, the method may comprise limiting the operation (e.g. the power or rate of increase in power) of the propulsion system for a determined or predetermined period of time.

According to a further example embodiment of the present disclosure is a computer program product comprising computer readable instructions that, when implemented on a computer or a controller of a dynamic positioning system, causes the computer or controller to implement the method of the second aspect.

According to a yet further example embodiment of the present disclosure is a carrier medium comprising the computer program product of the further example embodiment. The carrier medium may be a transient or a non-transient carrier medium. The carrier medium may be a tangible carrier medium, such as an optical disk, a magnetic disk, a digital memory, a solid state storage device or solid state drive (SSD), a magnetic tape, a hard drive, and/or the like.

The individual features and/or combinations of features defined above in accordance with any aspect of the present invention or below in relation to any specific embodiment of the invention may be utilised, either separately and individually, alone or in combination with any other defined feature, in any other aspect or embodiment of the invention.

Furthermore, the present invention is intended to cover apparatus configured to perform any feature described herein in relation to a method and/or a method of using or producing, using or manufacturing any apparatus feature described herein.

### BRIEF DESCRIPTION OF THE DRAWINGS

These and other aspects of the present disclosure will now be described, by way of example only, with reference to the accompanying Figures, in which:
Figure 1 is a schematic of a drilling arrangement;
Figure 2 is a schematic of an example of a drilling arrangement involving a drilling vessel;
Figure 3 is a schematic of a control system for a dynamic positioning system for the drilling vessel shown in Figure 2;
Figure 4 is a comparison of power consumption in a dynamic positioning control scheme implemented by the control system of Figure 3 relative to that of a conventional control scheme; and
Figure 5 is a flowchart illustrating a method of performing dynamic positioning.

### DETAILED DESCRIPTION OF THE DRAWINGS

Various aspects and examples of the present disclosure relate to methods, systems and apparatus for the dynamic position control of offshore vessels. Any vessel may be considered, but for the purposes of the exemplary description provided below, a semi-submersible drilling vessel or "rig" is presented.

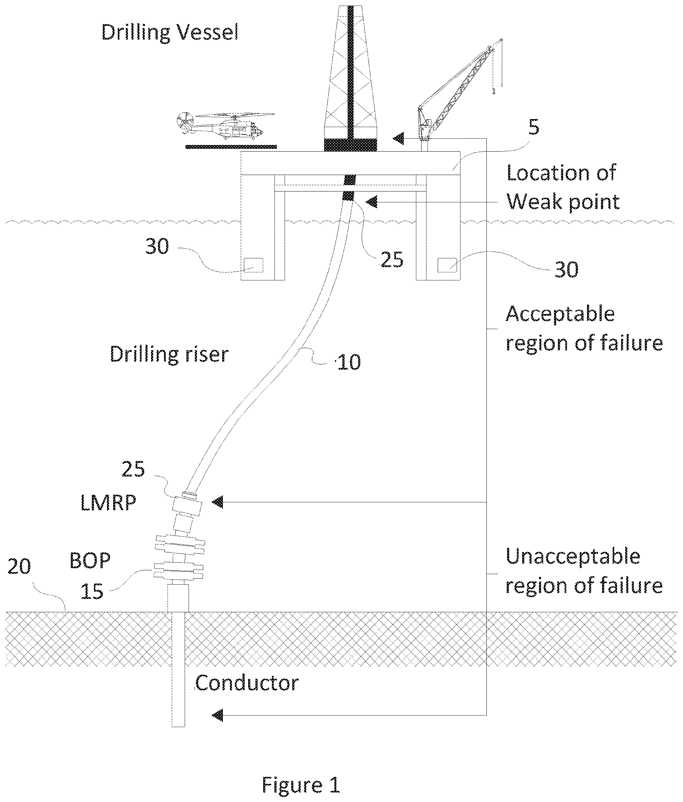

Figure 1 shows a semi-submersible 5 that is connected to and supports one end of a riser 10, which may be a drilling riser. The riser 10 extends from the vessel 5, underwater to connect to a structure such as a blow-out preventer (BOP) 15 on the sea bed 20. The riser is provided with a pair of flex joints 25, one at the surface end and one at the subsea end. The vessel 5 can be moved, e.g. due to currents, waves and wind, and is maintained in a target position using a dynamic positioning system, as is well known in the art. The vessel comprises a propulsion system that comprises a plurality of propulsion devices such as thrusters 30. The thrusters 30 are configured to propel the vessel 5 in different directions and are selectively controllable to adjust the position of the vessel 5.

The vessel shown in Figure 1 is a drilling rig, but it will be appreciated that use of dynamic positioning is not limited to this and can equally be used for ships, remotely operated vehicles or indeed any other suitable vessel or vehicle that uses a dynamic positioning system. Furthermore, although the riser 10 is connected at the subsea end to a BOP 15, it will be appreciated that the riser could be connected to any other suitable wellhead apparatus, such as a Xmas tree.

The dynamic positioning system of the vessel 5 is configured to determine the position of the vessel 5, compare the determined position of the vessel 5 with a target position and determine corrective control actions for specific thrusters 30 to, as far as possible, maintain the semi-submersible 5 substantially in the target position.

The dynamic positioning system can determine the position of the vessel using a range of sensors, such as satellite positioning sensors, beam based triangulation or relative positioning sensors, wire tension monitoring systems, sea monitoring sensors (e.g., acoustics), and/or the like. Although modern sensors used for position determination are generally reliable and failures can be mitigated by providing multiple sensors and different types of sensor, any failures or errors in the sensors used for position determination can cause the dynamic positioning system to believe that the vessel 5 has deviated further from the target position than it actually has. This in turn may cause the dynamic positioning system to request a sudden significant ramp up in the power of one or more of the thrusters 30 of the vessel 5 to counteract the false determination from the dynamic positioning system. This ramp up in thruster 30 operation resulting from the erroneous readings from the sensor used for position determination may have the effect of the vessel "driving off" from the target position.

Since the riser 10 is suspended between the vessel 5 and the BOP 15 or other well head component, drive-off of the vessel results in different parts of the riser being subjected to different degrees of bend, tilt or re-orientation. Generally the ends of the riser 10 that are connected to the wellhead and supported by the vessel 5 are the worst affected and most likely to suffer failure as a result of the drive-off. The flex joints 25 are designed to preferentially flex or bend and can provide a degree of protection against such failure, but improved mechanisms for preventing drive off would be advantageous.

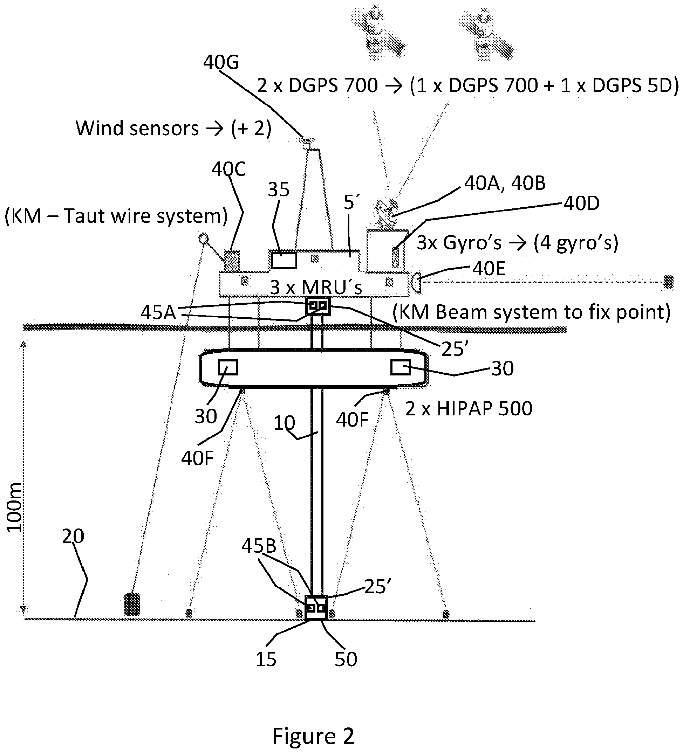

Figure 2 shows a vessel 5' provided with a dynamic positioning system that comprises a controller 35 that is in communication with a plurality of sensors 40A-40G and a plurality of riser sensors 45A, 45B. At least one of the sensors 40A-40G may be sensors used by the dynamic positioning system to determine the position of the vessel. The controller 35 is also configured to communicate with and control a propulsion system that comprises a plurality of propulsion devices of the vessel 5' in the form of thrusters 30. The propulsion system is a system specifically for manoeuvring and repositioning the vessel.

As in the example of Figure 1, the vessel 5' supports an end of a riser 10' that extends between the vessel 5' and a wellhead 50 on the seabed 20. Each end of the riser 5' is provided with a flex joint 25' and each flex joint is provided with at least three of the riser sensors 45A, 45B that monitor at least one property of the flex joint 25' that changes when the vessel 5' is moved. Suitable properties of the flex joint include tilt, inclination, angle, orientation, flex, bend, stress or strain, or other suitable property of the respective flex joint 25' or other part of the riser 10'. The controller 35 is configured to determine a value for the at least one property of each flex joint 25' based on the readings from the plurality of riser sensors 45A, 45B for that flex joint 25', e.g. by a majority decision, averaging or other statistical procedure. However, the riser sensors need not be located only at the flex joint 25' and one or more riser sensors may be provided on or along the riser 10', in addition to or as an alternative to the riser sensors 45A, 45B at the flex joints 25'.

The sensors 40A-40G include a variety of different sensor types. In this particular example, the sensors 40A-40G include at least two satellite navigation sensors 40A, 40B provided on the vessel 5. In the present example, each of the satellite navigation sensors 40A, 40B is a different type of satellite navigation sensor, e.g. one of the satellite navigation sensors 40A is a DGPS 700 sensor, whilst the other is a DGPS 5D sensor. However, it will be appreciated that the satellite navigation sensors may be the same type of sensor or may comprise other types of satellite navigation sensors, such as GLONASS, Galileo or other sensors.

The sensors 40A-40G in this example also include a wire sensor 40C on the vessel 5 that determines a tension or force on a taut wire that is suspended between the vessel 5 and a fixed external point, e.g. on the sea bed. As the vessel 5 moves relative to the fixed external point, then the tension or force on the wire changes, which is measured by the wire sensor 40C and can be used in the estimation of position of the vessel 5.

The sensors 40A-40G in this example also include a plurality of motion sensors 40D, in this example in the form of four gyroscopic sensors, which are configured to measure motion of the vessel. However, other numbers or types of motion sensors 40D, such as accelerometers, could be used.

The sensors 40A-40G in this example further include a plurality of beam position sensors 40E, 40F, including a surface based beam sensor 40E that sends a beam to and/or receives a beam from a reference point, e.g. on land or on another vessel or other sea structure. The surface based beam sensor 40E can be used to determine changes in position of the vessel 5 relative to the reference point. Similarly, the vessel 5 comprises a plurality of underwater beam sensors 40F, such as sonar or other sonic sensors, that are each in communication with a plurality of reference points located on the sea bed using sonic or sonar signals and can be used to determine changes in the location of the vessel 5 using the relative timing and/or strength of the sonic or sonar signal received from each reference point. A plurality of reference points for each sensor 40F allows direction of motion of the vessel to be determined, e.g. using triangulation or other suitable techniques.

The sensors 40A-40G in this example further include condition sensors 40G, which include weather sensors such as wind sensors, and also include water current sensors to determine the speed, direction and/or strength of surface currents, e.g. currents at a depth of less than a depth threshold. The weather sensors are configured to determine parameters indicative of, or that are usable to derive, weather or environmental conditions experienced by the vessel. The weather or environmental conditions could, for example, comprise one or more of: wave conditions, wind conditions, current, wave height, instantaneous wave speed, average wave speed, wave force, wind strength, wind direction, wind force, current strength, current speed, force due to currents, and/or current direction at the vessel. For example, the condition sensors 40G may comprise at least one of: a water speed sensor, a tide direction sensor, a tide strength sensor, a current sensor such as a surface current sensor, a wave height sensor and/or the like.

The controller 35 is not limited to weather or environmental conditions directly derived from the condition sensor(s) 40G but instead may obtain at least some of the weather or environmental conditions from a database, remote server or weather service provider or derive the weather or environmental conditions from the data from the condition sensors 40G and/or the database, server or weather service data. In one example, the weather or environmental conditions comprise horizontal wave drift force on the vessel, which can be determined by the controller 35 using 3-D radiation-diffraction theory, under potential theory, empirically using wave drift force coefficients and/or the like. The weather or environmental conditions may comprise a viscous effect of the vessel or properties derived therefrom, which the controller may be configured to determine, e.g. from the data from the condition sensors 40G and/or the database, server or weather service data, such as by using the methods outlined in Dev, Arun. (2011). Environmental Forces for Dynamic Positioning: Ships vs. Semi-Submersibles. 64-78, Conference: 4th International Conference on Technology and Operation of Offshore Support Vessels, August 2011, 10.3850/978-981-08-9731-4_OSV2011-08, or in Dev, A.K.: "Viscous Effects in Drift Forces on Semi-submersibles", PhD Thesis, Ship Hydromechanics Laboratory, Delft University of Technology, Delft, The Netherlands, 1996.

The controller 35 is in communication with the sensors 40A-40G and uses the data collected by at least some of the sensors 40A-40G to determine a position of the vessel 5, e.g. according to a predetermined algorithm or other suitable relation.

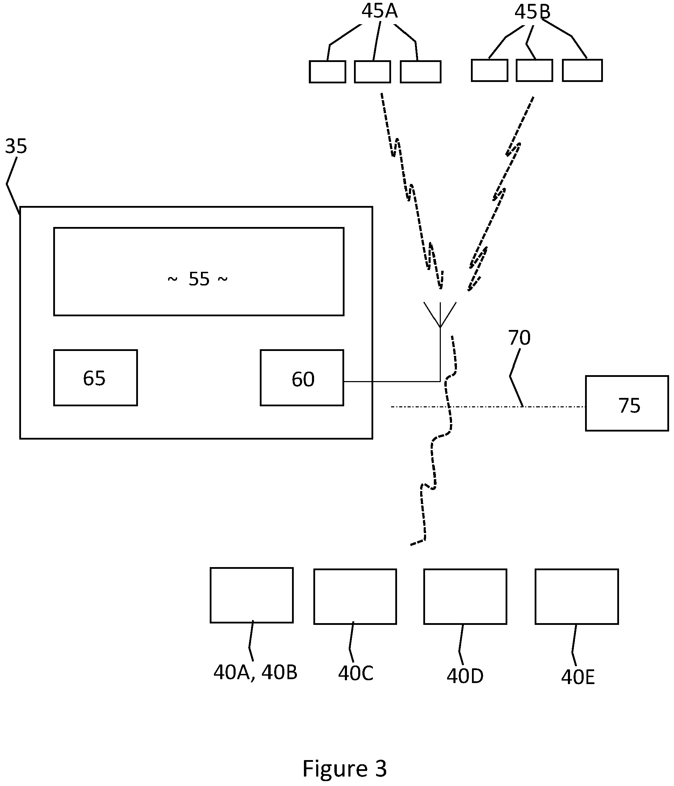

A detailed schematic of the controller 35 is shown in Figure 3. The controller 35 comprises a processor 55, a communications system 60 and a data store in the form of a memory 65. The communications system 60 is configured to communicate via wires 70 or wirelessly with the plurality of sensors 40A-40G used for position determination and the plurality of control sensors 45A, 45B to receive data signals therefrom. The communications system 60 is also configured to communicate via wires 70 or wirelessly with the vessel control system 75 that controls the thrusters 30 of the vessel 5 so as to be able to send control signals to the vessel control system 75 to control the thrusters 30. The wireless communications could comprise acoustic communications, e.g. along the riser 10, 10'.

Although an example of a controller 35 is shown in Figure 3, it will be appreciated that other controller configurations could be used. For example, the controller 35 may comprise a plurality of processors 55 and/or a plurality of data stores 60, which may be contained in a single unit or distributed, e.g. over several systems, some of which may be remote.

Furthermore, in an example, the controller could be functionally, logically or physically separated into a drive-off prevention controller and a dynamic position system controller. The dynamic positioning system controller determines the position of the vessel relative to the target position and controls the propulsion system of the vessel based on the determined position of the vessel relative to the target position. The drive-off prevention controller is configured to override or modify the control of the dynamic positioning system by the dynamic positioning system controller. In particular, the drive off prevention controller is configured to monitor one or more indicative conditions that may be indicative of the vessel being at the target position or not. The drive off prevention controller is then configured to selectively adjust the operation of the dynamic positioning system to control of the thrusters 30 when the indicative conditions are met. In this way, the drive-off control functionality may be retro-fitted to an existing dynamic positioning system by retro-fitting the drive-off controller, which communicates with (or is provided by a common control or computer system with) the dynamic positioning system controller of the existing dynamic positioning system.

In this way, the controller 35 can receive data from the plurality of sensors 40A-40G, which is processed by the controller 35 to determine the position of the vessel 5. The controller 35 can also use the data from the sensors 40A-40G, from a database or remote server and/or form riser sensors 45A, 45B, which is processed by the controller 35 to determine one or more indicative conditions that may be indicative of the vessel being at the target position or not. Examples of suitable indicative conditions include changes in the weather or environmental conditions, at least one property, e.g. inclination, of at least part of the riser 10, such as the inclination or orientation of the flex joints 25, amongst other possibilities.

For example, many conventional dynamic positioning adjustments may be due to weather or environmental conditions. If the dynamic positioning system determines that a significant positional adjustment is required such that a sudden increase in power demand is determined without a corresponding change in weather or environmental conditions, then this may be indicative that the determined control of the propulsion unit based on the determined position of the vessel is incorrect.

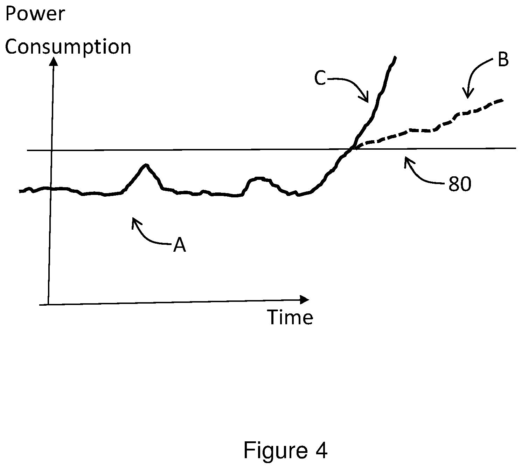

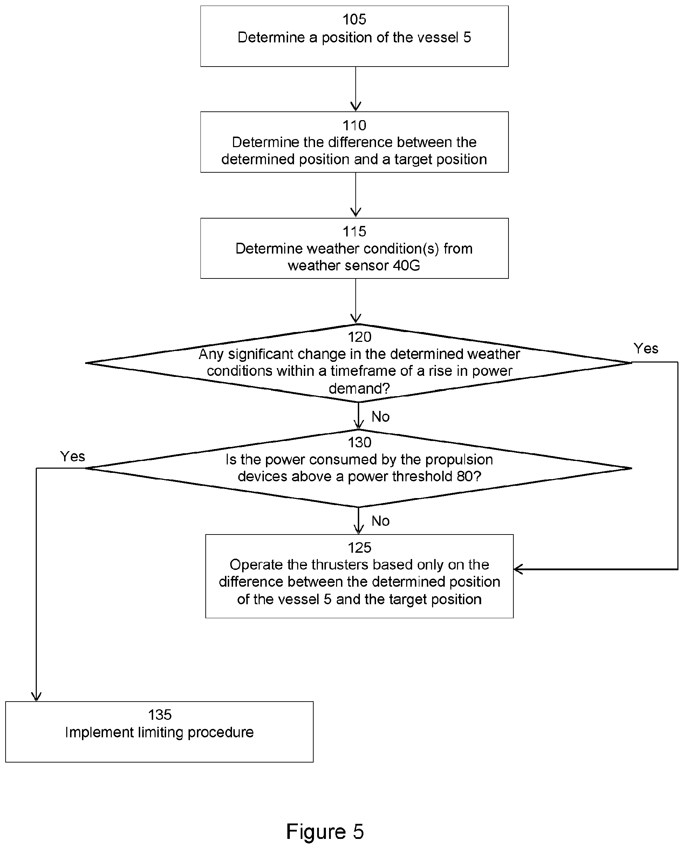

The actions performed by the controller 35 are described in relation to Figures 4 and 5.

In 105 of Figure 5, the controller 35 determines a position of the vessel 5 from data from the plurality of sensors 40A-40G. In 110 of Figure 5, the controller 35 determines the difference between the determined position and a target position, stored in the data store 65 and determines a control operation of the thrusters that is dependent on the determined difference, e.g. based on a look-up table, algorithm or some other predetermined relationship. The control operation is communicated from the controller 35 to the vessel control system 75 which then controls the thrusters 30 accordingly.

The power consumption of the thrusters 30 is monitored and communicated to the controller 35.

In steps 115 and 120 of Figure 5, the controller determines if the indicative condition is met. In this example, the indicative condition is the demand, or rate of increase in demand, of the propulsion system being greater than a first conditional threshold whilst weather or environmental data received by the drive-off prevention controller indicates that there has been no corresponding change in weather or environmental conditions (e.g. a change in weather conditions of greater than a threshold amount within a threshold period of time of the demand or change in demand).

In 115 of Figure 5, the controller 35 receives and/or determines the weather or environmental conditions as outlined above (e.g. one or more of: wave conditions, wind conditions, current, wave height, instantaneous wave speed, average wave speed, wave force, wind strength, wind direction, wind force, current strength, current speed, force due to currents, current direction, water speed, tide direction sensor, tide strength, surface currents, wave height and/or the like) from the condition sensor(s) 40G, from a database, remote server or weather service. As other examples, the weather or environmental conditions may comprise horizontal wave drift force on the vessel, and/or a viscous effect arising from the movement of water around the vessel or properties derived therefrom. For example, these may be determined as outlined above, e.g. using 3-D radiation-diffraction theory, under potential theory, empirically using wave drift force coefficients and/or the like or any of the other methods outlined in Dev, Arun. (2011). Environmental Forces for Dynamic Positioning: Ships vs. Semi-Submersibles. 64-78, Conference: 4th International Conference on Technology and Operation of Offshore Support Vessels, August 2011, 10.3850/978-981-08-9731-4_OSV2011-08 or in Dev, A.K.: "Viscous Effects in Drift Forces on Semi-submersibles", PhD Thesis, Ship Hydromechanics Laboratory, Delft University of Technology, Delft, The Netherlands, 1996.

In 120 of Figure 5, the controller 35 determines any change in the determined weather or environmental conditions within a set or preset timeframe of the rise in power demand and compares the determined change in the determined weather or environmental conditions with a respective threshold or operational range. The threshold or operational range may be pre-programmed and stored in the memory 65, calculated or manually input.

If the controller 35 determines that the value of the change in the determined weather or environmental conditions is above the threshold or outwith the operational range, then this is indicative of the riser 10 being in a condition in which the vessel 5 may have moved significantly away from the target position and the controller 35 is configured to operate the thrusters 30 in accordance with the control operation determined from the difference between the determined position of the vessel 5 and the target position (125 of Figure 5), i.e. the controller 35 performs conventional dynamic positioning.

However, if the controller 35 determines that the change in weather or environmental condition is below the threshold or within the operational range, then this is indicative of the vessel 5 being close to the target position (i.e. there is no change in weather or environmental condition to give rise to the sudden change in power demand). In this case, the controller 35 determines if the power currently being consumed by the thrusters 30 is above a power threshold 80 (130 of Figure 5) and, if so, implements a limiting procedure in which the control operation of the thrusters 30 is adjusted such that the rate of increase in power supplied to the thrusters above a threshold power 80 is limited (135 of Figure 5). If not, the controller continues to operate the thrusters 30 in accordance with the control operation determined from the difference between the determined position of the vessel 5 and the target position (125 of Figure 5).

In this way, as can be seen in region A of Figure 4, the controller 35 can control the thrusters 30 with small variations in power to make small adjustments to the position of the vessel 5, as would be expected to respond to tides, current, waves and wind, for example. However, if the operational control determined by the controller 35 results in the power supplied to the thrusters 30 being above the power threshold 80, then the controller 35 adjusts control of the thrusters such that the rate of increase in power consumed by the thrusters is limited, as can be seen in region B of Figure 4. This prevents a large, sudden increase in power drawn by the thrusters 30, which would otherwise be the case (see region C in Figure 4) and instead results in a much slower ramp up of thruster 30 operation.

In this way, whilst the indicative condition is met, then it is likely that the vessel is close to the target position such that any large, sudden increases in thruster operation 35 are more likely to be the result of erroneous reading from one of more of the sensors 40A-40G used for position determination and are as such delayed by limiting the rate of increase of thruster power 35 beyond a power threshold. This allows an operator much more time to assess if the situation requiring the ramp up in thruster 30 power is genuine and to make a manual intervention if it is not. However, it does not prevent low power operations of the thrusters 30 that result in a power draw that is below the power threshold that are much more likely to be genuinely needed. Beneficially, the limiting of the rate of increase of power in the manner described also does not prevent increases in thruster 30 operation, it only delays them and only in cases where the control sensors indicate that the riser is in a configuration associated with the vessel being close to the target range. This ensures that any genuine requirement for increased thruster 30 operation above the power threshold will get implemented, albeit delayed. Furthermore, the controller 35 may optionally be configured to implement a time dependent limiting scheme, wherein the limit on rate of increase in power is ended or increased after a certain period of time.

In view of the above, examples of the controller 35 provide improved prevention of drive-off due to errors in the determination of the position of the vessel 5, e.g. due to faulty sensors and the like.

Although, specific examples are described above in relation to the Figures, it will be appreciated that variations on the above examples are possible.

Although examples described above use power consumed or rate of increase in power consumed, as a metric or threshold, it will be appreciated that other metrics such as power demand, rate of increase in power demand, power output or rate of increase in power output may be used instead.

In addition, in the example given above, the controller is configured to selectively apply the adjustment of the control of the propulsion system based on one or more conditions in order to protect against drive-off. One of the conditions may be that the demand, or rate of increase in demand, of the propulsion system is greater than a first conditional threshold whilst weather or environmental data received by the controller indicates that there has been no corresponding change in weather or environmental conditions, as outlined above.

However, the controller may be configured to use other conditions in addition to or instead of any of the conditions above. For example, one of those conditions may be a property of the riser (e.g. bend, tile, inclination and/or the like) determined by the controller is below the associated threshold or within the operational range. Another condition may be that the amount of power demanded or consumed by the propulsion system is above the power threshold. One of the conditions may be that the demand, or rate of increase in demand, of the propulsion system is greater than a second conditional threshold resulting from a change in position that is greater than a distance threshold, e.g. greater than 5m or 10m, over a predetermined or determined period of time.

If one or more or all of the conditions are met, then the controller selectively applies the adjustment of the control of the propulsion system, e.g. by limiting the power characteristic of the propulsion system, otherwise the system simply controls the propulsion system based on the determined position of the vessel relative to the target position without the adjustment of the control of the propulsion system.

Furthermore, the vessel 5 need not be a drilling rig and other vessels such as ships or ROVs, drill ships, semi-submersibles, FPSOs, or any other type of vessel or vehicle that uses or could use a dynamic positioning system could be used instead.

In examples given above, a change (i.e. a corresponding change) in the weather or environmental conditions is determined to have taken place if there is a change in the weather or environmental conditions determined by the controller 35 that is greater than a threshold and occurs within a set or preset time period of the increase in power or the power being determined to be above the first conditional threshold. However, the present disclosure is not limited to this. For example, a change (i.e. a corresponding change) in the weather or environmental conditions could be determined to have taken place if there is a change in the weather or environmental conditions determined by the controller 35 implementing an algorithm such as a machine learning algorithm (e.g. a neural network or deep neural network) that maps weather or environmental conditions as inputs to determinations of whether there has been a corresponding change in weather or environmental conditions as outputs. Other possibilities for determining a change in weather conditions that excludes insignificant variation or noise in weather or environmental data may be used.

Although one possible example of controller 35 is descried in relation to Figure 3, the controller 35 configuration is not limited to this. Method steps of the invention can be performed by one or more programmable processors executing a computer program to perform functions of the invention by operating on input data and generating output. Method steps can also be performed by special purpose logic circuitry, e.g., an FPGA (field programmable gate array) or an ASIC (application-specific integrated circuit) or other customised circuitry. Processors suitable for the execution of a computer program include CPUs and microprocessors, and any one or more processors. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g. EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

As such, the present invention is not limited by the examples shown in the drawings but only by the claims.

## Claims

1. A vessel comprising a drive-off prevention controller (35), a dynamic positioning system, and a propulsion system (30), the drive off prevention controller (35) being configured to communicate with the dynamic positioning system,
- wherein the dynamic positioning system is configured:
∘ to determine a position of the vessel (5) relative to a target position and
∘ to determine an adjustment to the control of a propulsion system of the vessel (5) based on the determined position of the vessel (5) relative to the target position; and
- wherein the drive-off prevention controller (35) is configured to
∘ determine whether one or more indicative conditions are met; and
∘ when the one or more indicative conditions are met, selectively apply the adjustment to the control of the propulsion system (30) determined by the dynamic positioning system,
∘ when the one or more indicative conditions are not met, not apply the adjustment to the control of the propulsion system (30) determined by the dynamic positioning system,
**characterized in that** at least one of the one or more indicative conditions depends on weather or environmental data; and
that the drive-off prevention controller (35) is configured to receive and determine the weather or environmental data from a database, remote server or weather service.

2. The vessel of claim 1, **characterized in that** the at least one of the indicative conditions comprises the demand, or rate of increase in demand, of the propulsion system (30) being greater than a first conditional threshold whilst the weather or environmental data received by the drive-off prevention controller indicates that there has been no corresponding change in weather or environmental conditions, and wherein the drive-off prevention controller (35) is configured to apply the adjustment when that indicative condition is met and/or to not apply the adjustment when that indicative condition is not met.

3. The vessel of claim 1 or claim 2, **characterized in that** the weather or environmental data comprises one or more of: wave conditions, wind conditions and/or water current at the vessel (5), wave height, instantaneous wave speed, average wave speed, wave force, wind strength, wind direction, wind force, amount of rainfall, temperature, humidity, air pressure, current strength, current speed, force due to currents, and/or current direction at the vessel (5), water current speed, strength and/or direction in the water, at the surface or at or proximate the sea bed, under the vessel (5), and/or around the vessel (5), or loop currents in the water or under or around the vessel (5).

4. The vessel of claims 1-3, **characterized in that** the weather or environmental data comprises a vessel current that is a function or combination of a plurality of weather or environmental conditions that affect the vessel (5).

5. The vessel of claim 2 or any claim dependent thereon, **characterized in that** the weather or environmental conditions comprise horizontal wave drift force on the vessel (5), the speed, direction and/or strength of surface currents and/or a viscous effect due to or properties derived therefrom.

6. The vessel of any of claims 1-5, **characterized in that** the drive-off prevention controller (35) is configured to determine that there has been no corresponding change in weather or environmental conditions if one or more or all of the weather conditions change by less than a threshold amount, in a determined or predetermined or set timeframe or based on a determined or predetermined algorithm, machine learning algorithm or set of conditions or parameters.

7. The vessel according to claim 1-6, **characterized in that** the adjustment applied to the control of the propulsion system (30) comprises:
- limiting a power characteristic of the propulsion system, wherein the power characteristic that is limited is a power characteristic determined based on the position of the vessel relative to the target position.

8. The vessel according to claim 1-6, **characterized in that** the adjustment applied to the control of the propulsion system (30) comprises:
- reducing a set point for the propulsion system determined by the dynamic positioning system, wherein the set point optionally comprises one or more of a power set point, a torque set point, or a revolution rate set point.

9. The vessel of claim 7, **characterized in that** the drive-off prevention controller (35) is configured such that the control of the propulsion system (30) is adjusted by selectively limiting the power characteristic of the propulsion system (30) if the power demanded by the propulsion system is above a power threshold.

10. The vessel according to any preceding claim, **characterized in that** drive-off prevention controller (35) is configured such that, when the one or more indicative conditions are not met, then the controller (35) controls the propulsion system (30) according to the difference between the determined position of the vessel (5) and the target position, determined by the dynamic positioning system, without the adjustment or limiting of the propulsion system (30).

11. The vessel according to claim 7, **characterized in that** the power characteristic comprises a power demanded or a rate of increase in power demanded by the propulsion system (30).

12. The vessel according to any preceding claim, **characterized in that** the drive-off prevention controller (35) is configured to provide an alarm or other indicator when the controller (35) applies the adjustment to the control of the propulsion system (30) and/or the controller (35) is configured such that the operation of the controller (35) to apply the adjustment to the control of the propulsion system (30) can be manually overridden, switched off or cancelled.

13. The vessel according to any preceding claim, **characterized in that** the at least one or each of the indicative conditions is indicative of the vessel (5) being at or away from a position of the vessel (5) determined by a position determining system used to determine the location of the vessel (5) and/or at or away from the target position.

14. The vessel according to any preceding claim, **characterized in that** the drive-off prevention controller (35) is or comprises a drive-off prevention controller configured to override or modify the control of the dynamic positioning system by a dynamic positioning system controller.

15. A method for dynamically positioning a vessel, the method comprising:
- determining a position of a vessel relative to a target position;
- controlling a propulsion system of the vessel based on the determined position of the vessel relative to the target position;
- determining if one or more indicative conditions depending on weather or environmental data are met; and
- selectively applying an adjustment to the control of the propulsion system determined by the dynamic positioning system when the one or more indicative conditions depending on weather or environmental data are met, or
- not applying the adjustment to the control of the propulsion system determined by the dynamic positioning system when the one or more indicative conditions depending on weather or environmental data are not met,
**characterized in** determining the weather or environmental conditions received from a database, remote server or weather service

## Patentansprüche

1. Wasserfahrzeug, umfassend eine Abdriftverhinderungssteuerung (35), ein dynamisches Positioniersystem und ein Antriebssystem (30), wobei die Abdriftverhinderungssteuerung (35) dafür konfiguriert ist, mit dem dynamischen Positioniersystem zu kommunizieren,
- wobei das dynamische Positioniersystem zu Folgendem konfiguriert ist:
o eine Position des Wasserfahrzeugs (5) relativ zu einer Zielposition zu bestimmen, und
o eine Einstellung an der Steuerung eines Antriebssystems des Wasserfahrzeugs (5) basierend auf der bestimmten Position des Wasserfahrzeugs (5) relativ zu der Zielposition zu bestimmen, und
- wobei die Abdriftverhinderungssteuerung (35) zu Folgendem konfiguriert ist:
o zu bestimmen, ob eine oder mehrere indikative Bedingungen erfüllt sind, und
o wenn die eine oder die mehreren indikativen Bedingungen erfüllt sind, selektiv die Einstellung an der Steuerung des Antriebssystems (30) anzuwenden, die von dem dynamischen Positioniersystem bestimmt wird,
o wenn die eine oder die mehreren indikativen Bedingungen nicht erfüllt sind, die Einstellung an der Steuerung des Antriebssystems (30), die von dem dynamischen Positioniersystem bestimmt wird, nicht anzuwenden,
**dadurch gekennzeichnet, dass** mindestens eine von der einen oder den mehreren indikativen Bedingungen von Wetter- oder Umgebungsdaten abhängt; und
dass die Abdriftverhinderungssteuerung (35) dafür konfiguriert ist, die Wetter- oder Umgebungsdaten von einer Datenbank, einem entfernten Server oder einem Wetterdienst zu empfangen und zu bestimmen.

2. Wasserfahrzeug nach Anspruch 1, **dadurch gekennzeichnet, dass** die mindestens eine von den indikativen Bedingungen umfasst, dass der Bedarf oder die Anstiegsrate des Bedarfs des Antriebssystems (30) größer als ein erster bedingter Schwellenwert ist, während die von der Abdriftverhinderungssteuerung empfangenen Wetter- oder Umgebungsdaten angeben, dass keine entsprechende Änderung von Wetter- oder Umgebungsbedingungen vorlag, und wobei die Abdriftverhinderungssteuerung (35) dafür konfiguriert ist, die Einstellung anzuwenden, wenn diese indikative Bedingung erfüllt ist, und/oder die Einstellung nicht anzuwenden, wenn diese indikative Bedingung nicht erfüllt ist.

3. Wasserfahrzeug nach Anspruch 1 oder Anspruch 2, **dadurch gekennzeichnet, dass** die Wetter- oder Umgebungsdaten eine oder mehrere von Folgendem umfassen: Wellenbedingungen, Windbedingungen und/oder Wasserströmung an dem Wasserfahrzeug (5), Wellenhöhe, momentane Wellengeschwindigkeit, durchschnittliche Wellengeschwindigkeit, Wellenkraft, Windstärke, Windrichtung, Windkraft, Niederschlagsmenge, Temperatur, Feuchtigkeit, Luftdruck, Strömungsstärke, Strömungsgeschwindigkeit, Kraft aufgrund von Strömungen und/oder Strömungsrichtung an dem Wasserfahrzeug (5), Wasserströmungsgeschwindigkeit, -stärke und/oder -richtung im Wasser, an der Oberfläche oder am Meeresboden oder in der Nähe von diesem, unter dem Wasserfahrzeug (5) und/oder um das Wasserfahrzeug (5) herum, oder Ringströmungen im Wasser oder unter dem oder um das Wasserfahrzeug (5) herum.

4. Wasserfahrzeug nach den Ansprüchen 1 bis 3, **dadurch gekennzeichnet, dass** die Wetter- oder Umgebungsdaten eine Wasserfahrzeugströmung umfassen, die eine Funktion oder Kombination von einer Vielzahl von Wetter- oder Umgebungsbedingungen ist, die das Wasserfahrzeug (5) beeinflussen.

5. Wasserfahrzeug nach Anspruch 2 oder jedem davon abhängigen Anspruch, **dadurch gekennzeichnet, dass** die Wetter- oder Umgebungsbedingungen eine horizontale Wellendriftkraft auf das Wasserfahrzeug (5), die Geschwindigkeit, Richtung und/oder Stärke von Oberflächenströmungen und/oder eine viskose Wirkung aufgrund von oder davon hergeleiteten Eigenschaften umfassen.

6. Wasserfahrzeug nach einem der Ansprüche 1 bis 5, **dadurch gekennzeichnet, dass** die Abdriftverhinderungssteuerung (35) dafür konfiguriert ist, zu bestimmen, dass keine entsprechende Änderung von Wetter- oder Umgebungsbedingungen vorlag, sofern sich eine oder mehrere oder alle Wetterbedingungen um weniger als einen Schwellenwertbetrag in einem bestimmten oder vorbestimmten oder eingestellten Zeitrahmen oder basierend auf einem bestimmten oder vorbestimmten Algorithmus, Maschinenlernalgorithmus oder Satz von Bedingungen oder Parametern ändern.

7. Wasserfahrzeug nach Anspruch 1 bis 6, **dadurch gekennzeichnet, dass** die auf die Steuerung des Antriebssystems (30) angewandte Einstellung Folgendes umfasst:
- Begrenzen einer Leistungskennlinie des Antriebssystems, wobei die Leistungskennlinie, die begrenzt ist, eine Leistungskennlinie ist, die basierend auf der Position des Wasserfahrzeugs relativ zu der Zielposition bestimmt wird.

8. Wasserfahrzeug nach Anspruch 1 bis 6, **dadurch gekennzeichnet, dass** die auf die Steuerung des Antriebssystems (30) angewandte Einstellung Folgendes umfasst:
- Verringern eines Sollwertes für das Antriebssystem, der von dem dynamischen Positioniersystem bestimmt wird, wobei der Sollwert optional einen oder mehrere von einem Leistungssollwert, einem Drehmomentsollwert oder einem Drehzahlsollwert umfasst.

9. Wasserfahrzeug nach Anspruch 7, **dadurch gekennzeichnet, dass** die Abdriftverhinderungssteuerung (35) derart konfiguriert ist, dass die Steuerung des Antriebssystems (30) durch selektives Begrenzen der Leistungskennlinie des Antriebssystems (30) eingestellt wird, sofern die von dem Antriebssystem geforderte Leistung über einem Leistungsschwellenwert liegt.

10. Wasserfahrzeug nach einem der vorhergehenden Ansprüche, **dadurch gekennzeichnet, dass** die Abdriftverhinderungssteuerung (35) derart konfiguriert ist, dass, wenn die eine oder die mehreren indikativen Bedingungen nicht erfüllt sind, die Steuerung (35) das Antriebssystem (30) dann gemäß der Differenz zwischen der bestimmten Position des Wasserfahrzeugs (5) und der Zielposition, die von dem dynamischen Positioniersystem bestimmt wird, ohne die Einstellung oder Begrenzung des Antriebssystems (30) steuert.

11. Wasserfahrzeug nach Anspruch 7, **dadurch gekennzeichnet, dass** die Leistungskennlinie eine von dem Antriebssystem (30) geforderte Leistung oder von diesem geforderte Anstiegsrate der Leistung umfasst.

12. Wasserfahrzeug nach einem der vorhergehenden Ansprüche, **dadurch gekennzeichnet, dass** die Abdriftverhinderungssteuerung (35) dafür konfiguriert ist, einen Alarm oder einen anderen Indikator bereitzustellen, wenn die Steuerung (35) die Einstellung auf die Steuerung des Antriebssystems (30) anwendet, und/oder die Steuerung (35) derart konfiguriert ist, dass der Betrieb der Steuerung (35), um die Einstellung auf die Steuerung des Antriebssystems (30) anzuwenden, manuell übersteuert, ausgeschaltet oder aufgehoben werden kann.

13. Wasserfahrzeug nach einem der vorhergehenden Ansprüche, **dadurch gekennzeichnet, dass** die mindestens eine oder jede von den indikativen Bedingungen angibt, dass sich das Wasserfahrzeug (5) an oder abseits von einer Position des Wasserfahrzeugs (5), die durch ein Positionsbestimmungssystem bestimmt wird, das verwendet wird, um den Standort des Wasserfahrzeugs (5) zu bestimmen, und/oder an oder abseits von der Zielposition befindet.

14. Wasserfahrzeug nach einem der vorhergehenden Ansprüche, **dadurch gekennzeichnet, dass** die Abdriftverhinderungssteuerung (35) eine Abdriftverhinderungssteuerung, die dafür konfiguriert ist, die Steuerung des dynamischen Positioniersystems durch eine dynamische Positioniersystemsteuerung zu übersteuern oder zu modifizieren, ist oder umfasst.

15. Verfahren zum dynamischen Positionieren eines Wasserfahrzeugs, wobei das Verfahren Folgendes umfasst:
- Bestimmen einer Position eines Wasserfahrzeugs relativ zu einer Zielposition;
- Steuern eines Antriebssystems des Wasserfahrzeugs basierend auf der bestimmten Position des Wasserfahrzeugs relativ zu der Zielposition;
- Bestimmen, ob eine oder mehrere indikative Bedingungen abhängig von Wetter- oder Umgebungsdaten erfüllt sind, und
- selektives Anwenden einer Einstellung an der Steuerung des Antriebssystems, die durch das dynamische Positioniersystem bestimmt wird, wenn die eine oder die mehreren indikativen Bedingungen abhängig von Wetter- oder Umgebungsdaten erfüllt sind,
oder
- Nichtanwenden der Einstellung an der Steuerung des Antriebssystems, die durch das dynamische Positioniersystem bestimmt wird, wenn die eine oder die mehreren indikativen Bedingungen abhängig von Wetter- oder Umgebungsdaten nicht erfüllt sind,
**gekennzeichnet durch** das Bestimmen der von einer Datenbank, einem entfernten Server oder einem Wetterdienst empfangenen Wetter- oder Umgebungsbedingungen

## Revendications

1. Navire comprenant un régulateur de prévention de dérive (35), un système de positionnement dynamique et un système de propulsion (30), le régulateur de prévention de dérive (35) étant configuré pour communiquer avec le système de positionnement dynamique,
- dans lequel le système de positionnement dynamique est configuré pour :
∘ déterminer une position du navire (5) par rapport à une position cible, et
∘ déterminer un ajustement à apporter à la commande d'un système de propulsion du navire (5) sur la base de la position déterminée du navire (5) par rapport à la position cible ; et
- dans lequel le régulateur de prévention de dérive (35) est configuré pour :
∘ déterminer si une ou plusieurs conditions indicatives sont ou ne sont pas remplies ; et
∘ lorsque l'une ou les plusieurs conditions indicatives sont remplies, appliquer sélectivement l'ajustement à la commande du système de propulsion (30) déterminé par le système de positionnement dynamique,
∘ lorsque l'une ou les plusieurs conditions indicatives ne sont pas remplies, ne pas appliquer l'ajustement à la commande du système de propulsion (30) déterminé par le système de positionnement dynamique,
**caractérisé en ce qu'**au moins une de l'une ou des plusieurs conditions indicatives dépend de données météorologiques ou environnementales ; et
que le régulateur de prévention de dérive (35) est configuré pour recevoir et déterminer les données météorologiques ou environnementales en provenance d'une base de données, d'un serveur distant ou d'un service météorologique.

2. Navire selon la revendication 1, **caractérisé en ce que** l'au moins une des conditions indicatives comprend le fait que la demande, ou le taux d'augmentation de la demande, du système de propulsion (30) est supérieur à un premier seuil conditionnel alors que les données météorologiques ou environnementales reçues par le régulateur de prévention de dérive indiquent qu'il n'y avait aucun changement correspondant de conditions météorologiques ou environnementales, et dans lequel le régulateur de prévention de dérive (35) est configuré pour appliquer l'ajustement lorsque cette condition indicative est remplie et/ou pour ne pas appliquer l'ajustement lorsque cette condition indicative n'est pas remplie.

3. Navire selon la revendication 1 ou la revendication 2, **caractérisé en ce que** les données météorologiques ou environnementales comprennent un ou plusieurs des facteurs suivants : des conditions des vagues, des conditions du vent et/ou le courant marin au niveau du navire (5), la hauteur des vagues, la vitesse immédiate des vagues, la vitesse moyenne des vagues, la force des vagues, l'intensité du vent, la direction du vent, la force du vent, la quantité de précipitations, la température, l'humidité, la pression atmosphérique, l'intensité de courant, la vitesse de courant, la force due à des courants, et/ou la direction de courant au niveau du navire (5), la vitesse de courant marin, l'intensité et/ou la direction dans l'eau, à la surface ou au niveau ou à proximité du fond marin, sous le navire (5) et/ou autour du navire (5), ou des courants en boucle dans l'eau, sous ou autour du navire (5).

4. Navire selon les revendications 1 à 3, **caractérisé en ce que** les données météorologiques ou environnementales comprennent un courant du navire qui est une fonction ou une combinaison d'une pluralité de conditions météorologiques ou environnementales qui affectent le navire (5).

5. Navire selon la revendication 2 ou toute revendication qui en dépend, **caractérisé en ce que** les conditions météorologiques ou environnementales comprennent une force de dérive horizontale des vagues agissant sur le navire (5), la vitesse, la direction et/ou la force de courants de surface et/ou un effet visqueux dû à ou des propriétés qui en dérivent.

6. Navire selon l'une quelconque des revendications 1 à 5, **caractérisé en ce que** le régulateur de prévention de dérive (35) est configuré pour déterminer qu'il n'y avait aucun changement correspondant des conditions météorologiques ou environnementales si une ou plusieurs ou toutes les conditions météorologiques changent de moins d'une quantité seuil, dans un délai déterminé ou prédéterminé ou établi ou sur la base d'un algorithme déterminé ou prédéterminé, d'un algorithme d'apprentissage automatique ou d'un ensemble de conditions ou de paramètres

7. Navire selon la revendication 1 à 6, **caractérisé en ce que** l'ajustement appliqué à la commande du système propulsif (30) comprend :
- la limitation d'une caractéristique de puissance du système de propulsion, dans lequel la caractéristique de puissance qui est limitée est une caractéristique de puissance déterminée sur la base de la position du navire par rapport à la position cible.

8. Navire selon la revendication 1 à 6, **caractérisé en ce que** l'ajustement appliqué à la commande du système de propulsion (30) comprend :
- la réduction d'un point de consigne pour le système de propulsion déterminé par le système de positionnement dynamique, dans lequel le point de consigne comprend facultativement un ou plusieurs d'un point de consigne de puissance, d'un point de consigne de couple ou d'un point de consigne de vitesse de rotation.

9. Navire selon la revendication 7, **caractérisé en ce que** le régulateur de prévention de dérive (35) est configuré de telle façon que la commande du système de propulsion (30) est ajustée en limitant de manière sélective la caractéristique de puissance du système de propulsion (30) si la puissance demandée par le système de propulsion est supérieure à un seuil de puissance.

10. Navire selon l'une quelconque des revendications précédentes, **caractérisé en ce que** le régulateur de prévention de dérive (35) est configuré de telle façon que, lorsque l'une ou les plusieurs conditions indicatives ne sont pas remplies, le régulateur (35) commande alors le système de propulsion (30) en fonction de la différence entre la position déterminée du navire (5) et la position cible déterminée par le système de positionnement dynamique, sans l'ajustement ni la limitation du système de propulsion (30).

11. Navire selon la revendication 7, **caractérisé en ce que** la caractéristique de puissance comprend une puissance demandée ou un taux d'augmentation de puissance demandée par le système de propulsion (30).

12. Navire selon l'une quelconque des revendications précédentes, **caractérisé en ce que** le régulateur de prévention de dérive (35) est configuré pour fournir une alarme ou un autre indicateur lorsque le régulateur (35) applique l'ajustement à la commande du système de propulsion (30) et/ou le régulateur (35) est configuré de telle façon que l'opération du régulateur (35) pour appliquer l'ajustement à la commande du système de propulsion (30) peut être surpassée, désactivée ou annulée manuellement.

13. Navire selon l'une quelconque des revendications précédentes, **caractérisé en ce que** l'au moins une ou chacune des conditions indicatives indique que le navire (5) se trouve au niveau de ou est éloigné d'une position du navire (5) déterminée par un système de détermination de position utilisé pour déterminer l'emplacement du navire (5), et/ou se trouve au niveau de ou est éloigné de la position cible.

14. Navire selon l'une quelconque des revendications précédentes, **caractérisé en ce que** le régulateur de prévention de dérive (35) est ou comprend un régulateur de prévention de dérive configuré pour surpasser ou modifier la commande du système de positionnement dynamique par un régulateur de système de positionnement dynamique.

15. Procédé de positionnement dynamique d'un navire, le procédé comprenant les étapes consistant à :
- déterminer une position d'un navire par rapport à une position cible ;
- commander un système de propulsion du navire sur la base de la position déterminée du navire par rapport à la position cible ;
- déterminer si une ou plusieurs conditions indicatives dépendant de données météorologiques ou environnementales sont ou ne sont pas remplies ; et
- appliquer sélectivement un ajustement à la commande du système de propulsion déterminé par le système de positionnement dynamique, lorsque l'une ou les plusieurs conditions indicatives dépendant de données météorologiques ou environnementales sont remplies,
ou
- ne pas appliquer l'ajustement à la commande du système de propulsion déterminé par le système de positionnement dynamique, lorsque l'une ou les plusieurs conditions indicatives dépendant de données météorologiques ou environnementales ne sont pas remplies,
**caractérisé par** la détermination des conditions météorologiques ou environnementales reçues en provenance d'une base de données, d'un serveur distant ou d'un service météorologique
